**Europäisches Patentamt**

**European Patent Office**

**Office européen des brevets**

(11) Veröffentlichungsnummer: **0 269 967 B1**

(12) **EUROPÄISCHE PATENTSCHRIFT**

(45) Veröffentlichungstag der Patentschrift: **08.12.93**

(21) Anmeldenummer: **87117196.3**

(22) Anmeldetag: **21.11.87**

(51) Int. Cl.⁵: **B32B 7/02**, B32B 27/32

(54) **Aufreissstreifen.**

(30) Priorität: **29.11.86 DE 3640861**

(43) Veröffentlichungstag der Anmeldung:
**08.06.88 Patentblatt 88/23**

(45) Bekanntmachung des Hinweises auf die
Patenterteilung:
**08.12.93 Patentblatt 93/49**

(84) Benannte Vertragsstaaten:
**AT BE CH DE ES FR GB IT LI NL SE**

(56) Entgegenhaltungen:
**US-A- 3 288 323**

(73) Patentinhaber: **Beiersdorf Aktiengesellschaft**
**Unnastrasse 48**
**D-20245 Hamburg(DE)**

(72) Erfinder: **Engelmann, Eberhard, Dr.**
**Lauterberger Weg 24**
**D-2000 Hamburg 61(DE)**
Erfinder: **Schmeer, Gert**
**Tannenweg 32a**
**D-8221 Bergen(DE)**

**Beschreibung**

Gegenstand der Erfindung ist ein Aufreißstreifen mit einem in überwiegend einer Richtung gerecktem Trägermaterial, das mit einer Klebeschicht versehen sein kann. Der Aufreißstreifen ist insbesondere für Kartonagen geeignet.

Aus der US-Patentschrift 3 288 323 ist bereits ein als Behälterverschluß dienender Aufreißstreifen bekannt, mit dem eine Deckelöffnung verschlossen wird.

Selbstklebende oder wärmeaktivierbare Aufreißstreifen aus in Längsrichtung verstreckter Polypropylen-Folie werden für das Aufreißen von Kartonagen seit langem eingesetzt. Sie werden einerseits angeboten in Folienstärken von 60-65 $\mu$m mit einer Zugfestigkeit in Längsrichtung von 230-330 N/mm$^2$ entsprechend 55-85 N/4 mm Streifenbreite. Andererseits werden in geringem Umfang Aufreißstreifen in Stärken von 120-140 $\mu$m hergestellt mit einer Zugfestigkeit in Längsrichtung von ca. 400 N/mm$^2$ entsprechend 200-225 N/4 mm Streifenbreite.

Die Polypropylen-Aufreißstreifen in 60-65 $\mu$m zeigen ein einwandfreies Aufreißverhalten bei sämtlichen Wellpapp-Kartonagen einschließlich der Mikrowellpappe. Dieser Befund gilt unabhängig davon, ob genau in Richtung des aufgeklebten Streifens aufgerissen wird. "Genau in Richtung des aufgeklebten Streifens" bedeutet, daß der Aufreißstreifen beim Aufreißvorgang so geführt wird, daß die Zugrichtung nie von der Richtung abweicht, die der auf der Kartonrückseite verklebte Aufreißstreifen vorgibt und die während des Aufreißvorganges als Aufreißfuge auch von der Kartonvorderseite aus sichtbar wird. Nur dann ist die Kräfteverteilung im Aufreißstreifen bei dem Aufreißvorgang symmetrisch und die Belastung beider Schnittkanten gleichmäßig. In der Praxis wird diese ideale Aufreißrichtung meist nicht eingehalten. Man hat mit Abweichungen von dieser Richtung bis zu etwa 30° zu rechnen.

Die Polypropylen-Aufreißstreifen in 60-65 $\mu$m Stärke sind in gleicher Weise wie bei Wellpappen auch bei Vollpappen bis zu 600 g/m$^2$ Flächengewicht mit beidseitig auf der Papiermaschine aufgebrachten Kraftliner-Deckschichten geeignet, unabhängig von der Aufreißrichtung. Entsprechende 1000 g/m$^2$-Vollpappen lassen sich nur noch in der optimalen Aufreißrichtung störungsfrei aufreißen. Bei Abweichen von dieser Richtung können infolge der unsymmetrischen Belastung des Streifens von der stärker belasteten Kante des Streifens ausgehende Abrisse beim Aufreißvorgang auftreten. Die Häufigkeit der Abrisse wird z.B. von Inhomogenitäten in der Folie, von Mikroscharten in den Schnittkanten der Folienstreifen, von Holzteilchen oder besonders verfestigten Partikeln in der Pappe und ähnlichen Erscheinungen beeinflußt. Außerdem besitzt die Aufreißgeschwindigkeit einen Einfluß.

In den letzten Jahren werden besonders für die Verpackung von Waschmitteln in stärkerem Maße Vollpappen zwischen 450 und 600 g/m$^2$ Flächengewicht eingesetzt, die unter Umständen eine wachsimprägnierte Zwischenschicht aufweisen, auf jeden Fall aber mit einer auflaminierten Deckschicht aus hochglänzendem gußgestrichenem Chromolux$^R$-Papier versehen sind. Diese Pappen lassen sich mit den 60-65 $\mu$m starken Polypropylen-Aufreißstreifen nur mit einem ähnlich schlechten Ergebnis aufreißen wie die obengenannten 1000 g/m$^2$-Vollpappen.

Aufreißversuche an entsprechenden Kartonagen durch verschiedene Versuchspersonen zeigten Abrisse beim Aufreißvorgang in 40-80% der Fälle. In einzelnen Fällen wurden sogar Abrisse beim Aufreißen in der optimalen Aufreißrichtung beobachtet. Von den bekannten Aufreißstreifen sind für diese Fälle nur die 120-140 $\mu$m starken Aufreißstreifen mit einer Zugfestigkeit in Längsrichtung von ca. 400 N/mm$^2$ entsprechend 200-225 N/4 mm oder noch höher belastbare fadenverstärkte Aufreißstreifen geeignet. Aufgrund der aufwendigen Fertigungsverfahren und des hohen Materialbedarfs ist der Einsatz für beide Produkte relativ teuer.

Versuche haben ergeben, daß eine Polypropylen-Aufreißstreifenfolie mit 320 N/mm$^2$ Zugfestigkeit in Längsrichtung, wie sie für die 60-65 $\mu$m Aufreißstreifen eingesetzt wird, eine Dicke von etwa 140 $\mu$m haben muß, um einwandfreie Ergebnisse auf den obengenannten Waschmittelkartonagen auch bei um 30° abweichender Aufreißrichtung zu erzielen. Das entspricht dann einer Belastbarkeit von 180 N/4 mm. Für die aufwendig herzustellende Folie mit 400 N/mm$^2$ Zugfestigkeit in Längsrichtung, die vom Markt her nur in 120-140 $\mu$m bekannt ist, ergäbe sich bei dieser Belastbarkeit von 180 N/4 mm immer noch eine Dicke von 112 $\mu$m.

Es besteht somit die Aufgabe, Aufreißstreifen herzustellen, die bei möglichst geringer Dicke und damit möglichst geringen Kosten, Materialien mit hohem Aufreißwiderstand, insbesondere Kartonagen, bei denen die bekannten 60-65 $\mu$m Polypropylen-Aufreißstreifen versagen, einwandfrei aufreißen.

Insbesondere besteht die Aufgabe, einen mit einer druckempfindlichen oder heißsiegelbaren Klebemasse ausgerüsteten Aufreißstreifen herzustellen, der eine orientierte, vorwiegend längsgereckte Trägerfolie besitzt, die überwiegend aus Polypropylen besteht und die bei möglichst geringer Dicke ein optimales Aufreißergebnis gewährleistet, auch wenn die Aufreißrichtung von der Richtung des verklebten Streifens

2

abweicht. Für die maschinelle Verarbeitung des Aufreißstreifens ist es vorteilhaft, daß sich ein 4 mm breiter Aufreißstreifen bei einer Belastung von 25 N nicht mehr als um 10% dehnt.

Diese Aufgabe wird gelöst durch einen Aufreißstreifen mit einem in überwiegend einer Richtung gerecktem Träger, der vorzugsweise auch mit einer Klebeschicht versehen ist, der dadurch gekennzeichnet ist, daß der Träger aus mindestens einer Basisschicht besteht, die mit mindestens einer zähen Schicht versehen ist, die zäher ist als die Basisschicht.

"Zäh" bzw. "zäher" bedeutet in diesem Fall insbesondere, daß die zusätzliche Schicht so aufgebaut ist, daß diese Schicht bei einer schlagartigen Beanspruchung, bei der die Basisschicht bereits einen Sprödbruch erleidet, ohne Bruch mit hoher Dehnung unter Arbeitsaufnahme deformiert wird.

Eine zähe Schicht besitzt vorzugsweise eine höhere Schlagzähigkeit als die Basisschicht. "Zäh" bedeutet insbesondere "schlagzäh".

Weiterhin wird ein Aufreißstreifen mit einem in überwiegend einer Richtung gerecktem Träger bevorzugt, der vorzugsweise mit einer Klebeschicht versehen ist, der dadurch gekennzeichnet ist, daß der Träger aus mindestens einer Basisschicht besteht, die mit mindestens einer einen Schlagzähzusatz enthaltenden zähen Schicht versehen ist, die zäher ist als die Basisschicht.

"Zäh" bzw. "zäher" bedeutet in diesem Fall insbesondere, daß die zusätzliche Schicht durch Verwendung geeigneter schlagzäher oder schlagzähmachender Materialien so aufgebaut ist, daß diese Schicht bei einer schlagartigen Beanspruchung, bei der die Basisschicht bereits einen Sprödbruch erleidet, ohne Bruch mit hoher Dehnung unter Arbeitsaufnahme deformiert wird.

Bevorzugt wird weiterhin ein Aufreißstreifen mit einem in überwiegend einer Richtung gerecktem Träger, der vorzugsweise mit einer Klebeschicht versehen ist, der dadurch gekennzeichnet ist, daß der Träger aus mindestens einer polypropylenhaltigen Basisschicht besteht, die mit mindestens einer polypropylenhaltigen zähen Schicht versehen ist, die zäher ist als die Basisschicht. Vorzugsweise enthalten Basisschichten und/oder der gesamte Träger überwiegend Polypropylen.

Besonders bevorzugt wird ein Aufreißstreifen mit einem in überwiegend einer Richtung gerecktem Träger, der mit einer Klebeschicht versehen ist, der dadurch gekennzeichnet ist, daß er einen Träger aus mindestens einer ein Polypropylen-Olefin-Copolymerisat und/oder ein Polypropylen-Schlagzähzusatz-Gemisch enthaltenden Basisschicht besitzt, die mit mindestens einer polypropylenhaltigen zähen Schicht versehen ist, die einen Schlagzähzusatz enthält und zäher ist als die Basisschicht.

Die Basisschicht oder die Basisschichten enthalten bevorzugt überwiegend, vorzugsweise zu mindestens 70%, ein Polypropylen mit hohem, vorzugsweise mindestens 70% isotaktischem Anteil, insbesondere mit ca. 95%.

Vorzugsweise werden statistische oder auch Blockcopolymere aus Propylen und Olefinen verwendet. Besonders bevorzugt werden Propylen-Ethylen-Copolymere eingesetzt, die bis zu 20% Ethylen copolymerisiert enthalten.

Die Basisschicht bzw. die Basisschichten können bis zu 100% Propylen-Olefin-Copolymere enthalten oder können, diesen Copolymeren beigemischt, vorzugsweise bis zu 25% eines Schlagzähzusatzes enthalten. Dieser ist geeignet, die Schlagzugzähigkeit von in der Bahnrichtung verstreckten Polypropylen, insbesondere in der Richtung senkrecht dazu, zu verbessern.

Bevorzugte Schlagzähzusätze sind lineares Polyethylen niedriger Dichte (LLDPE), thermoplastischer Kautschuk wie Butadien-Styrol-Copolymerisate (SBS) oder Isopren-Styrol-Copolymerisate (SIS), insbesondere jeweils deren Blockcopolymerisate, oder Ethylen-Vinylacetat-Copolymere (EVA).

Die Basisschichten können auch Polypropylen-Homopolymerisat enthalten, besitzen dann aber einen Schlagzähzusatz, vorzugsweise mindestens 10%, maximal bevorzugt 30%, zugemischt.

Auch Mischungen der genannten Propylen-Olefin-Copolymeren mit dem Propylenhomopolymerisat können verwendet werden, wobei entsprechend dem steigenden Copolymerisatanteil der Anteil der Schlagzähzusätze sinken kann.

Die Schlagzähzusätze werden vorzugsweise einzeln zugesetzt. Mischungen der angegebenen Schlagzähzusätze sind jedoch auch verwendbar.

Vorzugsweise enthalten die Basisschichten 75%-100% Copolymerisat und 25%-0% LLDPE oder 80%-100% Copolymerisat mit 20%-0% thermoplastischen Kautschuk, insbesondere SBS, oder 75%-100% Copolymerisat und 25%-0% EVA, besonders bevorzugt jedoch 80%-95% Copolymerisat und 5%-20% LLDPE oder 85%-95% Copolymerisat und 5%-15% thermoplastischen Kautschuk, insbesondere SBS, oder 85%-95% Copolymerisat und 5%-15% EVA.

Für die auf der Basisschicht oder den Basisschichten angeordnete zähe Schicht bzw. die zähen Schichten werden Materialmischungen eingesetzt, die vorzugsweise deutlich höhere Anteile eines Schlagzähzusatzes enthalten und/oder sich durch eine höhere Schlagzugzähigkeit auszeichnen als die Basisschichten. Eine zähe Schicht enthält vorzugsweise Polypropylen, insbesondere bis zu 65% Propylen-Olefin-Copolymerisat oder 55% Propylen-Homo-Polymerisat, wie für die Basisfolie angegeben, vorzugsweise jeweils mindestens 20%, denen vorzugsweise 35% oder 45%-80% eines Schlagzähzusatzes, insbesondere der oben angegebenen Schlagzähzusätze LLDPE, thermoplastische Kautschuke oder EVA zugegeben werden. Die Schlagzähzusätze werden vorzugsweise einzeln zugesetzt. Mischungen der Schlagzähzusätze sind jedoch auch möglich. Auch hier können Mischungen der genannten Propylen-Olefin-Copolymeren mit dem Propylenhomopolymerisat verwendet werden. Wie in den Basisschichten bewirkt der Schlagzähzusatz eine Verbesserung der Schlagzugzähigkeit, insbesondere quer zur Hauptreckrichtung.

Vorzugsweise enthalten die zähen Schichten 20%-50% Copolymerisat und 80%-50% LLDPE oder 50-70% Copolymerisat und 50-30% thermoplastischen Kautschuk, insbesondere SBS, oder 20-40% Copolymerisat und 80%-60% EVA, besonders bevorzugt jedoch 30%-40% Copolymerisat und 60%-70% LLDPE oder 55%-65% Copolymerisat und 35%-45% thermoplastischen Kautschuk, insbesondere SBS, oder 25%-35% Copolymerisat und 65%-75% EVA.

Vorzugsweise wird in Basisschichten und den zähen Schichten jeweils der gleiche einzelne Schlagzähzusatz verwendet. Die Verwendung verschiedener einzelner Schlagzähzusätze oder gleicher oder verschiedener Mischungen der Schlagzähzusätze ist jedoch auch möglich.

Bei dem linearen Polyethylen niedriger Dichte (LLDPE) handelt es sich um ein spezielles Ethylen-Copolymer mit einer Dichte von 0.910-0.935 g/cm$^3$, welches unter Verwendung eines mindestens drei, vorzugsweise 3-10 Kohlenstoffatome enthaltenden Olefins copolymerisiert wurde (siehe L. Schwiegk: "LLDPE - ein neues Polyäthylen", Plastverarbeiter 33. Jahrgang 1982, Nr. 9, Seite 1035 - 1037).

Für die erfindungsgemäße Aufreißstreifen-Trägerfolie wird vorzugsweise ein LLDPE mit 1-Octen als Comonomer eingesetzt, das eine Dichte von ca. 0.920 g/cm$^3$ besitzt.

Als Butadien-Styrol-Schlagzähzusatz wird vorzugsweise ein Blockcopolymerisat mit etwa 50% Styrolgehalt verwendet. Die Verwendung ähnlich wirkender Styrol-Isopren-Copolymerisate ist ebenfalls möglich.

Basisschichten und/oder zähe Deckschichten können zusätzlich kleinere Anteile, vorzugsweise bis zu 10%, insbesondere bis zu 5%, weitere geeignete Polymere und übliche Zusatzstoffe enthalten.

Als Ethylen-Vinylacetat-Copolymerisat wird vorzugsweise ein Polymerisat mit 45% Vinylacetat-Gehalt eingesetzt.

Das Trägermaterial des erfindungsgemäßen Aufreißstreifens wird durch Extrusion und Verstrecken der einzelnen Schichten in mindestens einer Richtung und anschließendes Laminieren in bekannter Weise, vorzugsweise jedoch durch Koextrusion der Schichten zu einer koextrudierten Primärfolie und anschließendes Verstrecken der Primärfolie in mindestens einer Richtung unter Verwendung üblicher, allgemein bekannter Verfahren erhalten. Vorzugsweise wird in Längsrichtung gereckt.

Das Reckverhältnis bei der Reckung der koextrudierten Primärfolie in Längsrichtung beträgt vorzugsweise 1:5 bis 1:9, besonders bevorzugt 1:6.5 bis 1:7.5. Ein Reckverhältnis 1:6 gibt an, daß aus einem Abschnitt der Folie von z.B. 1m Länge ein Abschnitt von 6m Länge der gereckten Folie entsteht. Für den Ausdruck "Bahnrichtung" sind auch andere Formulierungen bekannt, beispielsweise: Längsrichtung, Maschinenlaufrichtung. Das Recken erfolgt, ohne daß die Breite der Primärfolie wesentlich abnimmt, einzig zu Lasten der Dicke der Folie.

Die Dicke der verstreckten Trägerfolie kann 50-150 µm betragen, vorzugsweise 60-120 µm, insbesondere 70-100 µm. Dabei beträgt der Anteil der Basisschicht oder Basisschichten zusammengerechnet 50-90%, vorzugsweise 65-75% der Gesamtdicke des Aufreißstreifenträgers.

Es wird vorzugsweise nur eine zähe Schicht aufgebracht, die dann besonders bevorzugt auf die nicht mit Klebstoff versehenen Oberfläche des fertigen Aufreißstreifens gelegt wird, so daß die Verklebung des Aufreißstreifens über die Basisschicht erfolgt. Es können jedoch auch zwei oder mehr zähe Schichten auf beiden Oberflächen der Basisschicht und übereinander angebracht oder koextrudiert sein.

Weiterhin ist es möglich eine oder mehrere zähe Schichten zwischen zwei oder mehreren Basisschichten anzuordnen, die dann an ihrer außen liegenden Oberfläche mit einer oder zwei zähen Schichten versehen sein können. In dieser Weise werden z.B. Aufreißstreifen mit fünf, vorzugsweise sich abwechselnden Schichten erhalten. Auch Aufreißstreifen mit wesentlich größerer Anzahl von Einzelschichten sind erhältlich.

Erfindungsgemäße Aufreißstreifen wurden vorzugsweise in den Breiten 2 - 8 mm, insbesondere 3 - 6 mm verwendet und besitzen dabei eine bevorzugte Dicke von 50 - 150 µm, vorzugsweise 60 - 120 µm.

Für den Aufreißvorgang und die maschinelle Verarbeitung des Aufreißstreifens ist es vorteilhaft, daß sich die Streifen bei einer Belastung von 20 N, vorzugsweise 25 N, insbesondere 35N um nicht mehr als 10% dehnt. Streifenbreite, Foliendicke und Reckverhältnis der Folie sind entsprechend aufeinander abzustimmen.

Zur Herstellung des Aufreißstreifenmaterials aus der Trägerfolie wird auf die Trägerfolie einseitig vorzugsweise eine an sich bekannte vorzugsweise druckempfindliche oder heißsiegelbare Klebemasse aufgebracht. Um die Verankerung der Klebemasse zu verbessern, kann die Oberfläche mit Methoden vorbehandelt werden, wie man sie üblicherweise für Polyolefinoberflächen anwendet, z.B. mit Corona- oder Flammvorbehandlung. Spezielle Verankerungsschichten können ebenfalls benutzt werden.

Der Ausdruck "mit einer Klebeschicht versehen" bedeutet auch, daß der Aufreißstreifen mit der Unterlage verbindbar oder verbunden, insbesondere verklebbar oder verklebt ist.

Die nicht mit Klebemasse beschichtete Rückseite der Trägerfolie ist vorzugsweise mit einer klebstoffabweisenden Trennschicht versehen.

Alle Mengenangaben, Anteile und Prozentanteile sind auf das Gewicht bezogen. "GT" bedeutet Gewichtsteile.

Die nachfolgenden Beispiele sollen die Erfindung erläutern, ohne sie darauf zu beschränken.

Beispiel 1

Eine Mischung I aus 90 GT Polypropylencopolymer mit 3-6% Ethylen, Schmelzindex (230/2,16) 0.9±0,3 g/10 min., z.B. Propathene GSF 113 der Firma ICI und 10 GT eines LLDPE mit einer Dichte von 0.920 g/cm$^3$, das als Comonomer 1-Octen enthält, Schmelzindex (230/2,16) 3.0±0.5 g/10 min., z.B. Stamylex PE 1026 der Firma DSM wird in einem Hauptextruder größerer Durchsatzleistung aufgeschmolzen und extrudiert. In einem zweiten Nebenextruder geringerer Durchsatzleistung wird eine Mischung II aus 35 GT des oben angegebenen Polypropylencopolymerisats mit 65 GT des oben angegebenen Polyethylencopolymerisats ebenfalls aufgeschmolzen. Beide Extruder sind so aufeinander abgestimmt, daß vermittels einer "Black box" über eine Breitschlitzdüse ein koextrudierter Film von insgesamt 620-650 μm Stärke und ca. 1400 mm Breite auf eine Kühlwalze extrudiert wird. Dabei beträgt der Anteil der Mischung I an der Gesamtdicke ca. 450-470 μm, der der Mischung II 180-200 μm. Dieser Primärfilm wird über Vorheizwalzen einem Walzenreckwerk üblicher Bauart zugeführt und bei Temperaturen von 100-135°C im Verhältnis 1:7.5 längsverstreckt. Die erhaltene Folie hat eine Dicke von 83-87 μm und nach Kantenbeschnitt eine Breite von 1200 mm. Der Anteil der Mischung I an der Gesamtdicke beträgt 60-63 μm. Die gereckte Gesamtfolie weist in Längsrichtung eine Zugkraft bei 10% Dehnung von 35 N/4mm, eine Reißkraft von 73 N/4mm und eine Reißdehnung von 40% auf. Aus dieser Folie wird gemäß dem Stand der Technik ein selbstklebender Aufreißstreifen gefertigt.

Auf die aus Mischung II entstandene Koextrusionsschicht wird ein handelsüblicher Silikontrennlack aus der Klasse der kondensationsvernetzenden Zweikomponenten-Systeme aufgebracht. Die Trennsubstanz wird als 5%ige Lösung in Toluol mit einem Walzenauftragswerk aufgetragen. Die Beschichtungsstärke (trocken) betrug 0.15 g/m$^2$.

Auf die coronavorbehandelte Oberfläche der Basisschicht wird ein druckempfindlicher Klebstoff aufgetragen.

Der Klebstoff besteht aus
42 GT Styrol-Isopren-Blockcopolymerisat (SIS)
20 GT Pentaerythritester des hydrierten Kolophoniums
37 GT aliphatischem Kohlenwasserstoffharz,
Erweichungspunkt 85°C,
1 GT Zinkbutyldithiocarbamat.

Der Klebstoff wird auf die coronavorbehandelte Folienoberfläche als 40%ige Lösung in Toluol mit anschließender Trocknung aufgetragen. Der Kleberauftrag beträgt ca. 25 g/m$^2$. Auch der Auftrag aus der Schmelze ist möglich.

Auf die Verwendung einer speziellen Verankerungsschicht zwischen Träger und Klebstoff konnte verzichtet werden. Selbstverständlich sind die dem Stand der Technik entsprechenden Polypropylen-Primer einsetzbar.

Selbstverständlich können auch alle anderen bei Klebebändern üblichen Massetypen eingesetzt werden wie z.B. Naturkautschukmassen aus Lösemittel oder Dispersion, Acrylatmassen aus Lösemittel, Dispersion oder Schmelze.

Nach der Beschichtung werden die beschichteten Trägerbahnen auf Spezialschneidemaschinen zu 4 mm breiten Aufreißstreifen aufgeschnitten und in üblicher Weise zu 10 000 m langen Großrollen aufgewickelt.

Beispiel 2

Abweichend vom Beispiel 1 wurde für die Basisschicht eine Mischung I aus 92 GT des in Beispiel 1 verwendeten Polypropylencopolymers und 8 Gew.-Teile eines Styrol-Butadien-Blockcopolymerisates mit ca.

50% Styrolgehalt und einem Schmelzindex (230/2.16) von 5-10 g/10 min. verwendet.

Für die Koextrusionsschicht wurde eine Mischung II aus 60 GT des oben angegebenen Polypropylencopoylmers und 40 GT des oben angegebenen Styrol-Butadien-Blockcopolymerisates benutzt.

Beide Mischungen wurden hergestellt, indem zunächst eine Mischung von 50 GT Polypropylencopolymer und 50 GT Styrol-Butadien-Blockcopolymerisat gemischt, als Strang extrudiert und anschließend granuliert wird. Das Granulat wird dann benutzt, um mit Polypropylencopolymerisat, die oben angegebenen Mischungsverhältnisse einzustellen, indem z.B. für die Mischung II 80 GT des eben beschriebenen Granulates mit 20 GT des Polypropylencopoylmers abgemischt werden. Bei einer direkten Einmischung des Styrol-Butadien-Polymerisats kommt es zu einer inhomogenen Verteilung dieses nur feindispers wirksamen Schlagzähzusatzes. Die Extrusion, Folienherstellung und Aufreißstreifenfertigung erfolgt in gleicher Weise wie in Beispiel 1.

Beispiel 3

Abweichend vom Beispiel 1 wird für die Basisschicht eine Mischung I aus 88 GT Polypropylencopolymeren und 12 GT Ethylen-Vinylacetat-Copolymer verwendet. Das Ethylen-Vinylacetat-Copolymer besitzt einen Vinylacetatgehalt von 45 % und weist als Abmischung von 40 GT mit 60 GT Propathene GSF 113 einen Schmelzindex 230/2,16 von 3,5-4,5 g/10 min. auf.

Für die Koextrusionsschicht wird eine Mischung II aus 35 GT Polypropylencopolymerisat und 65 GT Ethylen-Vinylacetat benutzt.

Vergleichsbeispiele A-C

Eine Mischung aus 90 GT Polypropylencopolymer und 10 GT LLDPE, entsprechend der Mischung I der Basisschicht des Beispiels I wird zu Primärfolien von 475 $\mu$m, 640 $\mu$m bzw. 865 $\mu$m Stärke extrudiert und mit einem Reckverhältnis 1:7.5 zu Folien mit 63 $\mu$m, 85 $\mu$m und 115 $\mu$m Stärke verstreckt.

Diese Trägerfolien werden ebenfalls zu Aufreißstreifen verarbeitet und in dem im folgenden beschriebenen Aufreißtest mit den erfindungsgemäßen Aufreißstreifen verglichen.

Die Eignungsprüfung der Aufreißstreifen im Aufreißtest wurde folgendermaßen ausgeführt:

Stanzzuschnitte von Original-10kg-Waschmittelkartonagen, hergestellt aus Vollpappe mit Wachsimprägnierung, laminiert mit einem hochglänzenden gußgestrichenen Chromolux-Papier, papierseitig mit Original-Bedruckung, Gesamt-Flächengewicht 590 g/m$^2$ wurden mit den zu prüfenden 4 mm breiten Aufreißstreifen an der auch in der Praxis vorgesehenen Stelle in einer Länge von 60 cm beklebt. Es sei hier darauf hingewiesen, daß Pappen in der Maschinenrichtung der Pappherstellung und senkrecht dazu unterschiedliches Aufreißverhalten zeigen können, so daß die vom Kartonagenhersteller vorgesehene Aufreißrichtung für die vergleichende Prüfung des Testes auch eingehalten werden muß. Um ein gutes Aufziehen der druckempfindlichen Klebemasse zu gewährleisten, wurden die verklebten Streifen mit einer 2 kg schweren Stahlrolle 2 mal übergerollt. Die so behandelten Kartonagen wurden anschließend 24 Stunden bei Raumtemperatur gelagert. Für den eigentlichen Aufreißtest wurden diese Pappen dann mit dem Aufreißstreifen nach unten auf eine Tischplatte gelegt. Verschiedene Testpersonen mußten diese Testpappen beginnend an dem vorgestanzten Anfasser in voller Länge aufreißen, wobei eine Abweichung von 30° von der optimalen Aufreißrichtung einzuhalten war. Die Pappe wurde dabei mit der einen Hand auf der Tischplatte festgehalten, mit der anderen Hand wurde der Aufreißvorgang durchgeführt. Dabei wurde die ca. 60 cm lange Verklebungslänge jeweils in 3 Intervallen zu 20 cm aufgerissen. Die Testpersonen waren angewiesen, nicht vorsichtig, sondern mit voller Kraftanwendung vorzugehen. Um eine Aufreißstreifenversion zu beurteilen, wurden 100 Aufreißvorgänge bewertet. Es wurden immer mindestens 2 Versionen zu einer Testserie gemischt. An einer Testserie waren mindestens 3 Personen mit jeweils der gleichen Anzahl, mindestens jedoch 66 Aufreißvorgängen beteiligt. Als Ergebnis wurde für jede Testversion die niedrigste und höchste Fehlerquote in % angegeben, die von den einzelnen Testpersonen gefunden wurden. Als Fehler wurde ein Durchreißen des Aufreißstreifens während des Aufreißvorganges bewertet.

Durch Vergleichsversuche an jeweils 10 gefalteten, gefüllten und verschlossenen Waschmittelkartons wurden die so erhaltenen Ergebnisse noch einmal exakt der Praxis entsprechend nachvollzogen. Bei dem Befund "Fehlerquote 0%" stimmten beide Testmethoden überein. Ansonsten gab die vereinfachte "ungefaltete" Testanordnung geringfügig (max. 10%) höhere Fehlerquoten.

Für die Beurteilung der Beispiele und Vergleichsbeispiele wurde nur die Bewertung der "ungefalteten" Testanordnung herangezogen.

In der folgenden Tabelle 1 werden die Aufreißstreifen gemäß Beispiel 1-3 mit denen der Vergleichsbeispiele A, B und C verglichen. Angegeben sind die Dicke und die das Zug-Dehnungsverhalten in Längsrichtung kennzeichnenden, bei 300 mm/min Prüfgeschwindigkeit gemessenen Werte der Kraft bei 10% Dehnung, der Reißkraft und der Reißdehnung, bezogen auf 4 mm breite Prüfstreifen. In der letzten Spalte der Tabelle sind die Ergebnisse des oben beschriebenen Testes in "% Fehler" angegeben.

Tabelle 1

| Beisp. | Dicke | Kraft bei 10% Dehng. | Reißkraft längs | Reißdeh- nung lgs. | Aufreiß- test Fehler |
|---|---|---|---|---|---|
| | $\mu$m | N/4 mm | N/4 mm | % | % |
| 1 | 85 | 35 | 73 | 40 | 0 |
| 2 | 83 | 28 | 65 | 45 | 0 |
| 3 | 85 | 30 | 67 | 43 | 0 |
| z.Ver- gleich | | | | | |
| A | 63 | 40 | 75 | 35 | 52-81 |
| B | 85 | 52 | 100 | 35 | 43-71 |
| C | 115 | 73 | 140 | 35 | 31-48 |

Es zeigt sich, daß die erfindungsgemäßen Aufreißstreifen ein einwandfreies und damit wesentlich besseres Aufreißverhalten aufweisen, als die der Vergleichsbeispiele A, B und C. Das Beispiel A entspricht dabei der Basisschicht des Beispiels 1 ohne koextrudierte zähe Schicht, andererseits in seinem Aufreißverhalten auch den auf dem Markt befindlichen 60-65 $\mu$m starken Aufreißstreifen. Die Beispiele B und C repräsentieren das Beispiel A in auf 85 bzw. 115 $\mu$m angehobener Dicke und entsprechend höheren Werten der Kraft bei 10% Dehnung und der Reißkraft, beides in Längsrichtung gemessen. Selbst der 115 $\mu$m starke Streifen des Beispiels C (ohne koextrudierte zähe Schicht) mit einer annähernd doppelt so hohen Reißkraft wie bei Beispiel 1-3 hat vergleichsweise ein völlig ungenügendes Aufreißverhalten, während die nur 85 $\mu$m starken erfindungsgemäß koextrudierten Aufreißstreifen den Aufreißtest fehlerfrei bestehen.

Überraschenderweise konnte also gefunden werden, daß sich erfindungsgemäße Aufreißstreifen aus längsgereckten Polypropylen herstellen lassen, die auf den obengenannten Kartonagen bei beliebiger Aufreißrichtung einwandfrei funktionieren und dabei weniger als 50% der Belastbarkeit im Zugversuch in Längsrichtung aufweisen, wie sie weiter oben mit 180 N/4 mm = 675 N/15 mm für einwandfrei funktionierende Aufreißstreifen nach dem Stand der Technik angegeben wurde.

**Patentansprüche**

1. Aufreißstreifen mit einem in überwiegend einer Richtung gereckten Träger mit mindestens einer Basisschicht, dadurch gekennzeichnet, daß der Träger aus mindestens einer polypropylenhaltigen Basisschicht besteht, die mit mindestens einer polypropylenhaltigen schlagzähen Schicht versehen ist, die schlagzäher ist als die Basisschicht.

2. Aufreißstreifen gemäß Anspruch 1, dadurch gekennzeichnet, daß der Träger aus mindestens einer Basisschicht besteht, die mit mindestens einer einen Schlagzähzusatz enthaltenden schlag zähen Schicht versehen ist, die schlag zäher ist als die Basisschicht.

EP 0 269 967 B1

**3.** Aufreißstreifen gemäß Anspruch 1 bis 2, dadurch gekennzeichnet, daß der Träger aus mindestens einer ein Polypropylen-Olefin-Copolymerisat und/oder ein Polypropylen-Schagzähzusatz-Gemisch enthaltenden Basisschicht besteht, die mit mindestens einer polypropylenhaltigen schlag zähen Schicht versehen ist, die einen Schlagzähzusatz enthält und schlag zäher ist als die Basisschicht.

**4.** Aufreißstreifen gemäß Anspruch 1 bis 3, dadurch gekennzeichnet, daß die Basisschicht einen Schlagzähzusatz enthält.

**5.** Aufreißstreifen gemäß Anspruch 1 bis 3, dadurch gekennzeichnet, daß die Dicke der Basisschicht oder Basisschichten 50%-90% der Trägerdicke beträgt.

**6.** Aufreißstreifen gemäß Anspruch 1 bis 3, dadurch gekennzeichnet, daß er aus einer Basisschicht und einer zähen Schicht besteht.

**7.** Aufreißstreifen gemäß Anspruch 1 bis 3, dadurch gekennzeichnet, daß er als Schlagzähzusatz lineares Polyäthylen niedriger Dichte enthält.

**8.** Aufreißstreifen gemäß Anspruch 1 bis 3, dadurch gekennzeichnet, daß er als Schlagzähzusatz thermoplastischen Kautschuk enthält.

**9.** Aufreißstreifen gemäß Anspruch 1 bis 3, dadurch gekennzeichnet, daß er als Schlagzähzusatz ein Ethylen-Vinylacetat-Copolymer enthält.

**10.** Aufreißstreifen gemäß Anspruch 1 bis 3, dadurch gekennzeichnet, daß er mit einer Selbstklebemasse versehen ist.

**11.** Aufreißstreifen gemäß Anspruch 1 bis 3, dadurch gekennzeichnet, daß er mit einer Heißsiegelmasse versehen ist.

**12.** Aufreißstreifen gemäß Anspruch 1 bis 3, dadurch gekennzeichnet, daß er durch Koextrusion der einzelnen Schichten und anschließendes Recken erhalten wurde.

**13.** Aufreißstreifen gemäß Anspruch 1 bis 3, dadurch gekennzeichnet, daß sich der Streifen bei einer Belastung von 20N um nicht mehr als 10% dehnt.

**Claims**

**1.** Tear strip having a supporting base stretched in predominantly one direction having at least one base layer, characterised in that the supporting base consists of at least one polypropylene-containing base layer, which is provided with at least one impact-resistant polypropylene-containing layer, which is more impact-resistant than the base layer.

**2.** Tear strip according to Claim 1, characterised in that the supporting base consists of at least one base layer, which is provided with at least one impact-resistant layer containing a toughening additive, which impact-resistant layer is more impact-resistant than the base layer.

**3.** Tear strip according to Claim 1 to 2, characterised in that the supporting base consists of at least one base layer containing a polypropylene-olefin copolymer and/or a polypropylene toughening additive mixture, which base layer is provided with at least one polypropylene-containing impact-resistant layer, which contains a toughening additive and is more impact-resistant than the base layer.

**4.** Tear strip according to Claims 1 to 3, characterised in that the base layer contains a toughening additive.

**5.** Tear strip according to Claims 1 to 3, characterised in that the thickness of the base layer or base layers is 50%-90% of the supporting base thickness.

**6.** Tear strip according to Claims 1 to 3, characterised in that it consists of a base layer and a tough layer.

8

**7.** Tear strip according to Claims 1 to 3, characterised in that it contains linear low density polyethylene as toughening additive.

**8.** Tear strip according to Claims 1 to 3, characterised in that it contains thermoplastic rubber as toughening additive.

**9.** Tear strip according to Claims 1 to 3, characterised in that it contains an ethylene-vinyl acetate copolymer as toughening additive.

**10.** Tear strip according to Claims 1 to 3, characterised in that it is provided with a self-adhesive compound.

**11.** Tear strip according to Claims 1 to 3, characterised in that it is provided with a hot-sealing compound.

**12.** Tear strip according to Claims 1 to 3, characterised in that it was obtained by coextrusion of the individual layers and subsequent stretching.

**13.** Tear strip according to Claims 1 to 3, characterised in that the strip elongates by no more than 10% under a loading of 20 N.

**Revendications**

**1.** Ruban de déchirement possédant un support étiré principalement dans une direction, ayant au moins une couche de base, caractérisé en ce que le support est composé d'au moins une couche de base contenant du polypropylène qui est pourvue d'au moins une couche résiliente contenant du polypropylène, plus résiliente que la couche de base.

**2.** Ruban de déchirement selon la revendication 1, caractérisé en ce que le support est composé d'au moins une couche de base qui est pourvue d'au moins une couche résiliente contenant un additif résilient, plus résiliente que la couche de base.

**3.** Ruban de déchirement selon les revendications 1 à 2, caractérisé en ce que le support est composé d'au moins une couche de base contenant un copolymère polypropylène-oléfine et/ou un additif résilient à base de polypropylène, qui est pourvue d'au moins une couche résiliente contenant du polypropylène, possédant un additif résilient et plus résiliente que la couche de base.

**4.** Ruban de déchirement selon les revendications 1 à 3, caractérisé en ce que la couche de base contient un additif résilient.

**5.** Ruban de déchirement selon les revendications 1 à 3, caractérisé en ce que l'épaisseur de la couche de base ou des couches de base correspond à 50%-90% de l'épaisseur du support.

**6.** Ruban de déchirement selon les revendications 1 à 3, caractérisé en ce qu'il est composé d'une couche de base et d'une couche résiliente.

**7.** Ruban de déchirement selon les revendications 1 à 3, caractérisé en ce qu'il contient en tant qu'additif résilient un polyéthylène linéaire de faible épaisseur.

**8.** Ruban de déchirement selon les revendications 1 à 3, caractérisé en ce qu'il contient en tant qu'additif résilient du caoutchouc thermoplastique.

**9.** Ruban de déchirement selon les revendications 1 à 3, caractérisé en ce qu'il contient en tant qu'additif résilient un copolymère éthylène-acétate de vinyle.

**10.** Ruban de déchirement selon les revendications 1 à 3, caractérisé en ce qu'il est muni d'une substance autocollante.

11. Ruban de déchirement selon les revendications 1 à 3, caractérisé en ce qu'il est muni d'une substance thermosoudable.

12. Ruban de déchirement selon les revendications 1 à 3, caractérisé en ce qu'on l'a réalisé par coextrusion des couches séparées et par un étirage final.

13. Ruban de déchirement selon les revendications 1 à 3, caractérisé en ce que le ruban ne s'étire pas de plus de 10 % pour une charge de 20N.